# EUROPEAN PATENT SPECIFICATION

(11) **EP 4 361 070 B1**
(45) Date of publication and mention of the grant of the patent: **29.10.2025**
(21) Application number: 22865113.9
(22) Date of filing: 02.09.2022
(51) Int. Cl.: B65G 47/90, H01M 50/211, B25J 15/00, B25J 15/02, H01M 10/0587, H01M 10/04

(54) **CELL GRIPPER AND CELL TRANSFER DEVICE INCLUDING THE SAME**
ZELLGREIFER UND ZELLÜBERTRAGUNGSVORRICHTUNG DAMIT
DISPOSITIF DE PRÉHENSION DE CELLULE ET DISPOSITIF DE TRANSFERT DE CELLULE LE COMPRENANT

(30) Priority: 03.09.2021 KR 20210117974
(43) Date of publication of application: 01.05.2024
(73) Proprietor: LG Energy Solution, Ltd., Seoul 07335 (KR)
(72) Inventor: CHO, Sung Bin, Daejeon 34122 (KR)
(74) Representative: Plasseraud IP
(86) International application number: PCT/KR2022/013233
(87) International publication number: WO 2023/033611

(56) References cited:
- CN-A- 106 898 239
- CN-U- 205 835 413
- KR-B1- 101 962 568
- KR-B1- 102 214 766
- KR-B1- 102 214 766
- US-A- 4 874 194
- US-A1- 2012 177 473
- US-A1- 2014 021 731
- US-A1- 2014 021 731

## Description

### TECHNICAL FIELD

### TECHNICAL FIELD

The present invention relates to a cell gripper and a cell transfer device including the same, and more particularly, to a cell gripper, which presses and fixes both the side surfaces of a cell during cell transfer to prevent the cell from sliding to be separated from a transfer device, minimize a time taken for a separate positioning operation to improve a tact time, and improve productivity even without increasing in load factor of the device, and a cell transfer device including the cell gripper. Such a device is known from document CN106898239A.

### BACKGROUND ART

Secondary batteries refer to batteries that are chargeable and dischargeable unlike non-rechargeable primary batteries, and are widely used in not only small electronic devices such as mobile phones and notebook computers, but also large products, such as electric vehicles, which require higher powers, energy storage systems (ESS) for storing surplus electricity or new renewable energy, and energy storage systems for backup.

In the secondary batteries, an electrode assembly mounted in a battery case is a chargeable and dischargeable power generation element having a structure in which a positive electrode/a separator/a negative electrode are stacked. The electrode assembly includes a jelly-roll-type electrode assembly wound by interposing a separator between sheet-shaped positive and negative electrodes that are coated with electrode active material slurry, a stacked type electrode assembly in which cells with a separator interposed between multiple positive and negative electrodes cut are stacked in sequence, and so on.

The secondary batteries are produced through multiple processes and thus, need to be transferred between various equipment. Here, when a cell is transferred between one equipment and another equipment, a cell transfer device in which the cell is seated is provided in an upper portion of a conveyor, and the cell is transferred by the conveyor while being seated in the cell transfer device. The cell that has reached a target equipment is picked up from an upper side by a pick & placement (P&P) unit to be subject to a process in subsequent equipment.

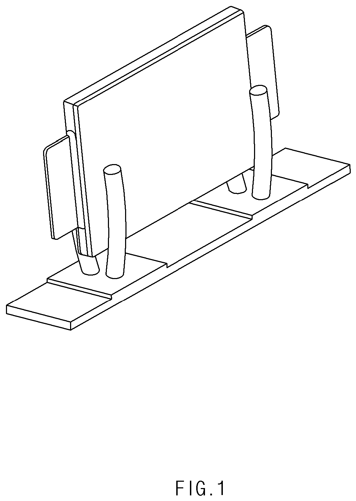

FIG. 1 is a perspective view illustrating a cell transfer device according to the related art and a cell seated in the cell transfer device. In the cell transfer device according to the related art with reference to FIG. 1, the cell transfer device according to the related art is provided with a U-shaped guide so that the cell is seated in an upright state. However, since a separate member that fixes the cell is not provided, there are frequent cases in which the cell slides to be separated from the transfer device. There is also a problem that the transfer speed of the conveyor needs to be restricted to a predetermined speed so as to prevent the cell from being separated, and this leads to deterioration in productivity.

Moreover, since the cell seated in the cell transfer device is transferred in an unfixed state, a positioning operation of re-aligning the position of the cell is essential before the cell is picked up after reaching the target equipment. This also leads to the deterioration in productivity.

In addition, when the transfer speed of the conveyor increases or a transfer amount of the cell increases so as to improve the productivity, there are problems that the load of a cylinder or P&P unit operated during the positioning operation increases and accordingly, the possibility of degradation of components increases.

### DISCLOSURE OF THE INVENTION

### TECHNICAL PROBLEM

An object of the present invention for solving the above problems is to provide a cell gripper, which presses and fixes both side surfaces of a cell during cell transfer to prevent the cell from sliding to be separated from a transfer device, minimize a time taken for a separate positioning operation to improve a tact time, and improve productivity even without increasing a load rate of the device, and a cell transfer device including the cell gripper.

### TECHNICAL SOLUTION

A cell gripper according to the present invention includes a housing and a grip assembly mounted in the housing, wherein the grip assembly includes: a cell support in which a cell seating groove having an upper portion into which a cell is introduced to be seated is defined; a pair of pinion gears that are provided on both side surfaces of the cell support respectively, and convert vertical linear movement of the cell support into rotational movement; a pair of gear frames that are coupled to the pair of pinion gears, respectively, and transmit the rotational movement of the pinion gears; and a pair of cell fixing members that are provided on end portions of the pair of gear frames, respectively, and press and fix the cell seated in the cell seating groove from both sides.

In the grip assembly, the pair of pinion gears may rotate by descent of the cell support, and the pair of gear frames and the pair of cell fixing members may move, by the rotation of the pair of pinion gears, in a direction of the cell seating groove to press and fix the cell from both the sides.

The grip assembly may further include an elastic member that is provided below the cell support and provides an elastic force in a vertical direction of the cell support.

The cell support may include: a pair of rack gears, each of which has a length in a vertical direction, is provided to be spaced apart from the other, and has an outside surface having sawteeth formed thereon; and a connection part that is provided below the pair of rack gears and connects the pair of rack gears to each other.

The cell seating groove may be defined by inner side surfaces of the pair of rack gears facing each other and the connection part provided below the pair of rack gears so as to have a U-shaped vertical section.

The pinion gears may be each provided with an axial through-hole, which passes through both side surfaces of the pinion gear at a position corresponding to a virtual rotary axis, and a coupling protrusion protruding outward from a side surface in which the axial through-hole is defined.

The gear frame may each include a first frame coupled at a side surface of each of the pinion gears, and a second frame having one side coupled to the first frame and the other side coupled to each of the cell fixing members, wherein the first frame has one side, which is disposed to correspond to an axial through-hole of the pinion gear so as to be coupled to the pinion gear, and the other side coupled to the second frame, and the first frame is coupled to a coupling protrusion of the pinion gear between the one side and the other side.

The gear frame may further include a third frame having one side coupled to the second frame and the other side rotatably coupled to the housing.

The third frame may be coupled to the second frame so as to be disposed between the cell fixing member and the first frame.

The cell fixing member may include a pressing part provided as a flat surface, and a pair of coupling parts bent backwards from both sides of the pressing part.

In the second frame, the other side opposite to the one side coupled to the first frame may be inserted between the pair of coupling parts to be rotatably coupled.

A notch groove having a U-shaped vertical section may be defined in the housing at a position facing the cell seating groove.

The notch groove may be defined to have a size greater than a size of the cell seating groove.

A cell transfer device according to the present invention includes a cell gripper provided in at least one, and a mount that fixes the cell gripper from below the cell gripper, wherein the cell gripper includes a housing and a grip assembly mounted in the housing, wherein the grip assembly includes: a cell support in which a cell seating groove having an upper portion into which a cell is introduced to be seated is defined; a pair of pinion gears that are provided on both side surfaces of the cell support, respectively, and convert vertical linear movement of the cell support into rotational movement; a pair of gear frames that are coupled to the pair of pinion gears, respectively, and transmit the rotational movement of the pinion gears; and a pair of cell fixing members that are provided on end portions of the pair of pinion gears, respectively, and press and fix the cell seated in the cell seating groove from both sides.

### ADVANTAGEOUS EFFECTS

The cell gripper and the cell transfer device according to the present invention include the housing and the grip assembly mounted in the housing. The grip assembly includes the cell support, in which the cell seating groove in which the cell is introduced from the upper side to be seated is defined, the pair of pinion gears, which are provided on both the side surfaces of the cell support and convert the vertical linear movement of the cell support into the rotational movement, the pair of gear frames, which are coupled to the pair of pinion gears, respectively, and transmit the rotational movement of the pinion gears, and the pair of cell fixing members which are provided on the end portions of the pair of gear frames, respectively, and press and fix the cell seated in the cell seating groove from both the sides. Accordingly, both the side surfaces of the cell may be pressed and fixed during the cell transfer to prevent the cell from sliding to be separated from the transfer device, minimize the time taken for the separate positioning operation to improve the tact time, and improve the productivity even without increasing the load rate of the device.

### BRIEF DESCRIPTION OF THE DRAWINGS

FIG. 1 is a perspective view illustrating a cell transfer device according to the related art and a cell seated in the cell transfer device.
FIG. 2 is a perspective view illustrating a cell gripper according to Embodiment 1 of the present invention and a cell to be seated in the cell gripper.
FIG. 3 is an exploded perspective view illustrating the cell gripper according to Embodiment 1 of the present invention.
FIG. 4 is a perspective view illustrating a coupling relationship between a pinion gear, a gear frame, and a cell fixing member of the cell gripper according to Embodiment 1 of the present invention.
FIG. 5 is a perspective view illustrating a cell transfer device according to Embodiment 2 of the present invention.

### MODE FOR CARRYING OUT THE INVENTION

Hereinafter, preferred embodiments of the present invention will be described in detail with reference to the accompanying drawings so as to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

### Embodiment 1

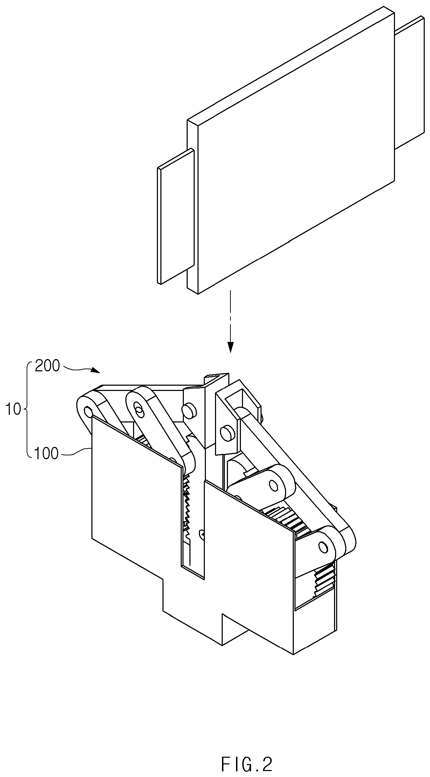

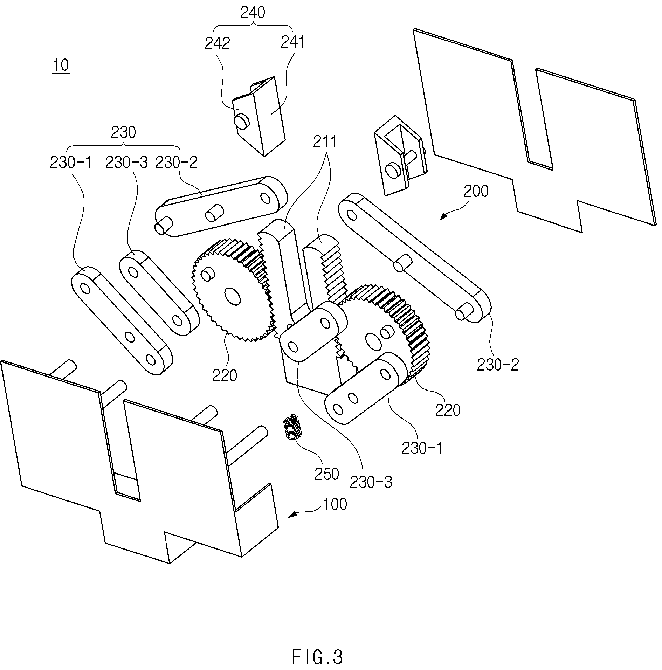

FIG. 2 is a perspective view illustrating a cell gripper 10 according to Embodiment 1 of the present invention and a cell to be seated in the cell gripper 10. FIG. 3 is an exploded perspective view illustrating the cell gripper 10 according to Embodiment 1 of the present invention.

Referring to FIG. 2, the cell gripper 10 according to the present invention includes a housing 100 and a grip assembly 200 mounted in the housing 100.

As illustrated in FIGS. 2 and 3, the housing 100 may be a component that is provided to partially surround the outside of the grip assembly 200, fixes the grip assembly 200 therein, and protects the grip assembly 200 from external impact. Thus, the housing 100 may be provided according to the shape of the grip assembly 200 to be described later. A notch groove having a U-shaped vertical section may be defined in the housing 100 at a position facing a cell seating groove of the grip assembly 200 to be described later. The notch groove may serve to prevent an end portion of the cell from colliding with the housing 100 when the cell is seated in the cell seating groove. Here, the notch groove may be defined to have a size greater than the size of the cell seating groove to be described later. In more detail, the notch groove may have a size that is enough so as not to collide with the housing even though the cell is seated on the cell seating groove to descend. The descent of the cell seating groove will be described below in detail.

Successively, referring to FIG. 3, the grip assembly 200 is a component, which presses and fixes both side surfaces of the cell to prevent the cell from sliding to be separated during cell transfer, and includes a cell support 210, a pinion gear 220, a gear frame 230, and a cell fixing member 240.

The cell seating groove having an upper portion into which the cell is introduced to be seated is defined in the cell support 210. Here, the cell may mean an electrode assembly unit, in which an electrode and a separator are alternately stacked and which is cut to have a flat surface having a rectangular shape with a long side and a short side, and may include cells having various shapes such as bi-cell, mono-cell, and half-cell. The cell may be introduced from above the cell support 210, and the long side may be introduced into an upper portion of the cell seating groove to be seated in a state in which the cell stands upright.

The pinion gear 220 is provided in a pair on both side surfaces of the cell support 210, respectively, and converts vertical linear movement of the cell support 210 into rotational movement. When the cell is seated, the cell support 210 may move by a self-weight of the cell in a downward direction or in the gravity direction (hereinafter, referred to as "descent of the cell support"). The pinion gear 220 is provided to be engaged with a side surface of the cell support 210 to rotate according to the descent of the cell support 210. Here, the pair of pinion gears 220 may be provided to be disposed at sides opposite to each other with the cell support 210 therebetween and accordingly, rotation directions of the pair of pinion gears 220 may be opposite to each other, for example, a clockwise direction and a counterclockwise direction. When the cell is removed from the cell support 210, the cell support 210, which has descended by the weight, may return in an upward direction or in a direction opposite to the gravity direction (hereinafter, referred to as "ascent of the cell support"), and the pinion gear 220 may rotate in a direction opposite to the direction in which the pinion gear 220 has rotated according to the descent of the cell support 210.

The gear frame 230 is coupled to each of the pair of pinion gears 220 and transmits the rotational movement of the pinion gear 220. The cell fixing member 240 is provided on an end portion of each of a pair of gear frames 230, and the cell fixing members 240 press and fix the cell seated in the cell seating groove from both sides.

As above, in the cell gripper 10 according to the present invention, the cell fixing members 240 press and fix both the side surfaces of the cell so that the cell may be prevented from sliding to be separated during the transfer, a time taken for a separate positioning operation may be minimized to improve a tact time, and productivity may be improved even without increasing a load rate of the device.

In the grip assembly 200, the pair of pinion gears 220 may rotate by the descent of the cell support 210, and the pair of gear frames 230 and a pair of cell fixing members 240 may move, by the rotation of the pair of pinion gears 220, in a direction of the cell seating groove to press and fix the cell from both the sides.

On the other hand, the pair of pinion gears 220 may rotate, by the ascent of the cell support 210, in directions opposite to directions in which the pinion gears 220 have rotated according to the descent of the cell support 210, respectively, and the pair of gear frames 230 and the pair of cell fixing members 240 may move, by the rotation of the pair of pinion gears 220 in the opposite directions, in a direction that is away from the cell seating groove to release the fixing at both the sides of the cell. That is, when the cell is seated in the grip assembly 200 and the cell weight is applied, the cell fixing members 240 may press and fix the cell from both the sides, and when the cell is picked up and the cell weight is removed, the cell fixing members 240 may operate so as to release the fixing of the cell.

The grip assembly 200 may further include an elastic member 250 that is provided below the cell support 210 and provides an elastic force in a vertical direction of the cell support 210. Here, the elastic member 250 may be selected as a spring, but is not necessarily limited thereto. The elastic member is sufficient as long as one having a material or structure that is compressed when the cell is seated on the cell support 210 and recovered when the cell is removed. The elastic force of the elastic member 250 may be defined so that when the cell is seated on the cell support 210, the elastic member 250 can further descend than an initial position of the cell support 210 by the weights of the cell support and the cell.

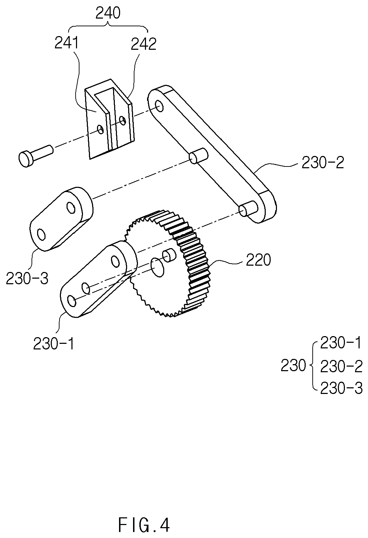

Hereinafter, respective components of the grip assembly 200 will be described in detail with reference to FIGS. 3 and 4. FIG. 4 is a perspective view illustrating a combinational relationship among the pinion gear 220, the gear frame 230, and the cell fixing member 240 of the cell gripper 10 according to Embodiment 1 of the present invention.

As illustrated in FIG. 3, the cell support 210 may include a rack gear 211 and a connection part 212. The rack gear 211 may have a length in the vertical direction, be provided in a pair to be spaced apart from each other, and have an outside surface having sawteeth defined thereon. The sawteeth defined on the outside surface of the rack gear 211 may be engaged with the pinion gear 220 described above to transmit, to the pinion gear 220, the linear movement of the ascent or descent of the cell support 210. The connection part 212 may be provided below the pair of rack gears 211 to connect the pair of rack gears 211 to each other. Accordingly, the pair of rack gears may ascend or descend as one movement, and also the pair of pinion gears 220 may rotate at the same angle.

The cell seating groove defined in the cell support 210 may be defined inner side surfaces of the pair of rack gears 211 facing each other and the connection part 212 provided below the pair of rack gears 211 so as to have a U-shaped vertical section. That is, when in a state in which the cell stands upright, the long side of the cell is introduced into the upper portion of the cell seating groove to be seated, a lower portion of the cell may be supported by the connection part 212, and wide side surfaces of the cell may be supported, without being separated, by the inner side surfaces of the pair of rack gears 211 provided above the connection part 212.

Referring to FIGS. 3 and 4 together, the pinion gear 220 may be provided with an axial through-hole, which passes through both side surfaces of the pinion gear 220 at a position corresponding to a virtual rotary axis, and a coupling protrusion protruding outward from a side surface in which the axial through-hole is defined. A stationary shaft may pass through the axial through-hole of the pinion gear 220 so that the pinion gear 220 rotates in a state fixed in the vertical direction. Here, the stationary shaft may be provided in an inner surface of the housing 100. The coupling protrusion is provided on the side surface, in which the axial through-hole is defined, and may be provided to be spaced a predetermined distance from the axial through-hole. Here, the predetermined distance is determined as the dimension of a distance by which the gear frame 230 and the cell fixing member 240 to be described later move by the rotation of the pinion gear 220. Thus, as the distance between the coupling protrusion and the axial through-hole is relatively great, movement distances of the gear frame 230 and the cell fixing member 240 increase, and as the distance between the coupling protrusion and the axial through-hole is relatively small, the movement distances of the gear frame 230 and the cell fixing member 240 decrease.

The gear frame 230 may include a first frame 230-1, a second frame 230-2, and a third frame 230-3. The first frame 230-1 may be coupled at a side surface of the pinion gear 220. In more detail, the first frame 230-1 may have one side disposed to correspond to the axial through-hole of the pinion gear 220 to be coupled to the pinion gear 220. Here, a coupling hole (a reference symbol not shown) may be defined in the one side of the first frame 230-1, and the first frame 230-1 may be coupled at the side surface of the pinion gear 220 in a state in which the stationary shaft described above passes through the coupling hole of the one side of the first frame 230-1 and the axial through-hole of the pinion gear 220 together.

The first frame 230-1 may have the other side coupled to the second frame 230-2, and be coupled to the coupling protrusion of the pinion gear 220 between the one side and the other side. In more detail, a coupling hole may be defined also in the other side of the first frame 230-1, and a coupling protrusion provided on the second frame 230-2 is inserted into the coupling hole so that the first frame 230-1 and the second frame 230-2 may be rotatably coupled to each other at the other side of the first frame 230-1. A coupling hole may be defined also between the one side and the other side of the first frame 230-1, and the coupling protrusion provided on the side surface of the pinion gear 220 described above is inserted into the coupling hole so as to be coupled. However, the coupling method is not necessarily limited to such a coupling method using the coupling hole and the coupling protrusion. For example, the coupling protrusion may be provided in the first frame 230-1, and the coupling holes may be defined in the pinion gear 220 and the second frame 230-2 so as to be coupled to each other.

The second frame 230-2 may have one side coupled to the first frame 230-1 and the other side coupled to the cell fixing member 240. The structure in which the second frame 230-2 is coupled to the cell fixing member 240 will be described later.

The third frame 230-3 may have one side coupled to the second frame 230-2 and the other side rotatably coupled to the housing 100. In more detail, a coupling hole may be defined in the one side of the third frame 230-3, and a coupling protrusion provided on the second frame 230-2 may be inserted into the coupling hole so that the third frame 230-3 and the second frame 230-2 are rotatably coupled to each other. Here, the coupling protrusion provided on the second frame 230-2 is a component different from the coupling protrusion described above, which is coupled to the first frame 230-1, and may be provided at a point between positions at which the cell fixing member 240 and the first frame 230-1 are coupled to the second frame 230-2, respectively. That is, the third frame 230-3 may be coupled to the second frame 230-2 so as to be disposed between the cell fixing member 240 and the first frame 230-1. Accordingly, a movable range of the second frame 230-2 may be appropriately restricted, and the cell fixing member 240 to be described later may accurately press the side surface of the cell.

The third frame 230-3 may have the other side rotatably coupled to the housing 100. In more detail, another coupling hole may be defined in the other side of the third frame 230-3, and a stationary shaft defined in the inner surface of the housing 100 may pass through the coupling hole so as to be coupled. Here, the stationary shaft defined in the inner surface of the housing 100 is a component different from the stationary shaft described above, which passes through the pinion gear 220 and the first frame 230-1, and may be a component that fixes the third frame 230-3 alone. Thus, in a state in which the other side of the third frame 230-3 is fixed to the housing 100, the one side of the third frame 230-3 coupled to the second frame 230-2 may move.

Referring to FIG. 4, the cell fixing member 240 may include a pressing part 241 and a coupling part 242. The pressing part 241 is provided as a flat surface and may be a surface that presses and fixes the flat surface of the cell. Since the pressing part 241 is provided as a flat surface, damage of the cell may be minimized and also the cell may be effectively fixed compared to a method for fixing the cell by clamping.

A pair of coupling parts 242 may be provided to be bent from both sides of the pressing part 241 to a backward direction. Here, the backward direction may mean a direction opposite to the flat surface on which the pressing part 241 presses and fixes the cell. The pair of coupling parts 242 may be bent in the backward direction of the pressing part 241 to define a space between the coupling parts 242. Here, the other side of the second frame 230-2, which is opposite to the one side coupled to the first frame 230-1, may be inserted between the pair of coupling parts 242 so as to be rotatably coupled. Accordingly, even when the second frame 230-2 moves in an upward and downward direction or in a front and rear direction, a pressing part 241 surface of the cell fixing member 240 may be maintained to face in a certain direction. When the method of coupling the second frame 230-2 to the coupling parts 242 of the cell fixing member 240 is described in detail, coupling holes may be defined in the pair of coupling parts 242, respectively, a coupling hole may be defined also in the other side of the second frame 230-2, and the second frame 230-2 may be coupled to the coupling parts 242 at a position, which corresponds to the coupling holes of coupling parts 242 and the coupling hole of the second frame 230-2 described above, through a fixing pin, a screw, or the like, passing therethrough.

### Embodiment 2

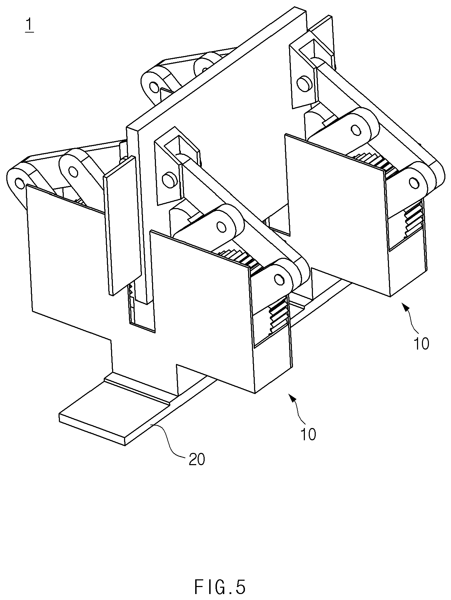

FIG. 5 is a perspective view illustrating a cell transfer device according to Embodiment 2 of the present invention. Embodiment 2 of the present invention is different from Embodiment 1 in terms of the cell transfer device including the cell gripper according to Embodiment 1.

The content in common with Embodiment 1 will be preferably omitted and the description of Embodiment 2 will be focused on differences. That is, it is apparent that the content that is not described in Embodiment 2 may be regarded as the content of Embodiment 1 if necessary.

Referring to FIG. 5, a cell transfer device 1 according to Embodiment 2 of the present invention is provided with at least one cell gripper 10, and include a mount 20 that fixes the cell gripper 10 from below the cell gripper 10. That is, the cell gripper 10 may be provided in one or at least two as necessary. Preferably, as illustrated in FIG. 5, two cell grippers 10 are fixed and held to an upper portion of the mount 20. Accordingly, when the cell is seated in a direction of the long side, the two cell grippers 10 may more stably fix the cell.

The cell transfer device 1, which includes the cell gripper 10 and the mount 20 that fixes the cell gripper 10, may be transferred by means of, e.g., a conveyor belt. The cell gripper 10 includes a housing 100 and a grip assembly 200 mounted in the housing 100. The grip assembly 200 includes a cell support 210, in which a cell seating groove having an upper portion into which a cell is introduced to be seated is defined, a pair of pinion gears 220, which are provided on both side surfaces of the cell support 210, respectively, and convert vertical linear movement of the cell support 210 into rotational movement, a pair of gear frames 230, which are coupled to the pair of pinion gears 220, respectively, and transmit the rotational movement of the pinion gears 220, and a pair of cell fixing members 240 which are provided on end portions of the pair of gear frames 230, respectively, and press and fix the cell seated in the cell seating groove from both sides.

Accordingly, the cell transfer device 1 according to the present invention may prevent the cell from sliding to be separated, minimize the time taken for the separate positioning operation to improve the tact time, and improve the productivity even without increasing the load rate of the device. In the cell transfer device 1 according to Embodiment 2 of the present invention, the detailed configuration of the cell gripper 10 and the resultant effects may be understood to be the same as those in Embodiment 1.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Cell transfer device
10: Cell gripper
20: Mount
100: Housing
200: Grip assembly
210: Cell support
211: Rack gear
212: Connection part
220: Pinion gear
230: Gear frame
230-1: First frame
230-2: Second frame
230-3: Third frame
240: Cell fixing member
241: Pressing part
242: Coupling part
250: Elastic member

## Claims

1. A cell gripper comprising:
a housing (100); and
a grip assembly (200) mounted in the housing (100),
**characterised in that** the grip assembly (200) comprises
a cell support (210) in which a cell seating groove having an upper portion into which a cell is introduced to be seated is defined;
a pair of pinion gears (220) provided on both side surfaces of the cell support (210), respectively, and configured to convert vertical linear movement of the cell support (210) into rotational movement;
a pair of gear frames (230) coupled to the pair of pinion gears (220), respectively, and configured to transmit the rotational movement of the pinion gears; and
a pair of cell fixing members (240) provided on end portions of the pair of gear frames (230), respectively, and configured to press and fix the cell seated in the cell seating groove from both sides.

2. The cell gripper of claim 1, wherein, in the grip assembly (200), the pair of pinion gears (220) rotate by descent of the cell support (210), and the pair of gear frames (230) and the pair of cell fixing members (240) move, by the rotation of the pair of pinion gears (220), in a direction of the cell seating groove to press and fix the cell from both the sides.

3. The cell gripper of claim 1, wherein the grip assembly (200) further comprises an elastic member (250) provided below the cell support (210) and configured to provide an elastic force in a vertical direction of the cell support (210).

4. The cell gripper of claim 1, wherein the cell support (210) comprises:
a pair of rack gears (211), each of which has a length in a vertical direction, is provided to be spaced apart from the other, and has an outside surface having sawteeth formed thereon; and
a connection part provided below the pair of rack gears (211) and configured to connect the pair of rack gears (211) to each other.

5. The cell gripper of claim 4, wherein the cell seating groove is defined by inner side surfaces of the pair of rack gears (211) facing each other and the connection part provided below the pair of rack gears (211) so as to have a U-shaped vertical section.

6. The cell gripper of claim 1, wherein each of the pinion gears (220) is provided with:
an axial through-hole passing through both side surfaces of the pinion gear (220) at a position corresponding to a virtual rotary axis; and
a coupling protrusion protruding outward from a side surface in which the axial through-hole is defined.

7. The cell gripper of claim 1, wherein each of the gear frames (230) comprises:
a first frame (230-1) coupled at a side surface of each of the pinion gears (220); and
a second frame (230-2) having one side coupled to the first frame (230-1) and the other side coupled to each of the cell fixing members (240),
wherein the first frame (230-1) has one side, which is disposed to correspond to an axial through-hole of the pinion gear (220) so as to be coupled to the pinion gear (220), and the other side coupled to the second frame (230-2),
wherein the first frame (230-1) is coupled to a coupling protrusion of the pinion gear (220) between the one side and the other side.

8. The cell gripper of claim 7, wherein the gear frame (230) further comprises a third frame (230-3) having one side coupled to the second frame (230-1) and the other side rotatably coupled to the housing (100).

9. The cell gripper of claim 8, wherein the third frame (230-3) is coupled to the second frame (230-2) so as to be disposed between the cell fixing member (240) and the first frame (230-1).

10. The cell gripper of claim 7, wherein the cell fixing member (240) comprises:
a pressing part (241) provided as a flat surface; and
a pair of coupling parts (242) bent backwards from both sides of the pressing part (241).

11. The cell gripper of claim 10, wherein, in the second frame (230-2), the other side opposite to the one side coupled to the first frame (230-1) is inserted between the pair of coupling parts (242) to be rotatably coupled.

12. The cell gripper of claim 1, wherein a notch groove having a U-shaped vertical section is defined in the housing (100) at a position facing the cell seating groove.

13. The cell gripper of claim 12, wherein the notch groove is defined to have a size greater than a size of the cell seating groove.

14. A cell transfer device (1) comprising:
a cell gripper (10) provided in at least one; and
a mount (20) configured to fix the cell gripper (10) from below the cell gripper (10),
wherein the cell gripper is a cell gripper according to claim 1.

## Patentansprüche

1. Zellgreifer, umfassend:
ein Gehäuse (100); und
eine Greifanordnung (200), welche in dem Gehäuse (100) angebracht ist,
**dadurch gekennzeichnet, dass** die Greifanordnung (200) umfasst
einen Zellträger (210), in welchem eine Zellsitznut, welche einen oberen Abschnitt aufweist, in welchen eine Zelle eingeführt ist, um zu sitzen, definiert ist;
ein Paar von Ritzeln (220), welche jeweils an beiden Seitenflächen des Zellträgers (210) bereitgestellt sind und dazu eingerichtet sind, eine vertikale Linearbewegung des Zellträgers (210) in eine Rotationsbewegung umzuwandeln;
ein Paar von Zahnradrahmen (230), welche jeweils mit dem Paar von Ritzeln (220) gekoppelt sind und dazu eingerichtet sind, die Rotationsbewegung der Ritzel zu übertragen; und
ein Paar von Zellbefestigungselementen (240), welche jeweils an Endabschnitten des Paars von Zahnradrahmen (230) bereitgestellt sind und dazu eingerichtet sind, die Zelle, welche in der Zellsitznut sitzt, von beiden Seiten zu drücken und zu befestigen.

2. Zellgreifer nach Anspruch 1, wobei, bei der Greifanordnung (200), das Paar von Ritzeln (220) durch Senken des Zellträgers (210) rotiert und das Paar von Zahnradrahmen (230) und das Paar von Zellbefestigungselementen (240) sich durch die Rotation des Paars von Ritzeln (220) in einer Richtung der Zellsitznut bewegen, um die Zelle von beiden der Seiten zu drücken und zu befestigen.

3. Zellgreifer nach Anspruch 1, wobei die Greifanordnung (200) ferner ein elastisches Element (250) umfasst, welches unter dem Zellträger (210) bereitgestellt ist und dazu eingerichtet ist, eine elastische Kraft in einer vertikalen Richtung des Zellträgers (210) bereitzustellen.

4. Zellgreifer nach Anspruch 1, wobei der Zellträger (210) umfasst:
ein Paar von Zahnstangen (211), von welchen jede eine Länge in einer vertikalen Richtung aufweist, bereitgestellt ist, um voneinander beabstandet zu sein, und eine Außenfläche aufweist, welche Sägezähne aufweist, welche darauf ausgebildet sind; und
ein Verbindungsteil, welches unter dem Paar von Zahnstangen (211) bereitgestellt ist und dazu eingerichtet ist, das Paar von Zahnstangen (211) miteinander zu verbinden.

5. Zellgreifer nach Anspruch 4, wobei die Zellsitznut durch innere Seitenflächen des Paars von Zahnstangen (211) definiert ist, welche einander zugewandt sind, und der Verbindungsteil unter dem Paar von Zahnstangen (211) bereitgestellt ist, um einen U-förmigen vertikalen Querschnitt aufzuweisen.

6. Zellgreifer nach Anspruch 1, wobei jedes der Ritzel (220) bereitgestellt ist, mit:
einem axialen Durchgangsloch, welches durch beide Seitenflächen des Ritzels (220) an einer Position tritt, welche einer virtuellen Rotationsachse entspricht; und
einen Kopplungsvorsprung, welcher von einer Seitenfläche nach außen vorspringt, in welcher das axiale Durchgangsloch definiert ist.

7. Zellgreifer nach Anspruch 1, wobei jeder der Zahnradrahmen (230) umfasst:
einen ersten Rahmen (230-1), welcher an einer Seitenfläche von jedem der Ritzel (220) gekoppelt ist; und
einen zweiten Rahmen (230-2), welcher eine Seite, welche mit dem ersten Rahmen (230-1) gekoppelt ist, und die andere Seite aufweist, welche mit jedem der Zellbefestigungselemente (240) gekoppelt ist,
wobei der erste Rahmen (230-1) eine Seite, welche angeordnet ist, um einem axialen Durchgangsloch des Ritzels (220) zu entsprechen, um mit dem Ritzel (220) gekoppelt zu sein, und die andere Seite aufweist, welche mit dem zweiten Rahmen (230-2) gekoppelt ist,
wobei der erste Rahmen (230-1) mit einem Kopplungsvorsprung des Ritzels (220) zwischen der einen Seite und der anderen Seite gekoppelt ist.

8. Zellgreifer nach Anspruch 7, wobei der Zahnradrahmen (230) ferner einen dritten Rahmen (230-3) umfasst, welcher eine Seite, welche mit dem zweiten Rahmen (230-1) gekoppelt ist, und die andere Seite aufweist, welche rotierbar mit dem Gehäuse (100) gekoppelt ist.

9. Zellgreifer nach Anspruch 8, wobei der dritte Rahmen (230-3) mit dem zweiten Rahmen (230-2) gekoppelt ist, um zwischen dem Zellbefestigungselement (240) und dem ersten Rahmen (230-1) angeordnet zu sein.

10. Zellgreifer nach Anspruch 7, wobei das Zellbefestigungselement (240) umfasst:
einen Drückteil (241), welcher als eine flache Fläche bereitgestellt ist; und
ein Paar von Kopplungsteilen (242), welche von beiden Seiten des Drückteils (241) nach hinten gebogen sind.

11. Zellgreifer nach Anspruch 10, wobei, bei dem zweiten Rahmen (230-2), die andere Seite, welche der einen Seite, welche mit dem ersten Rahmen (230-1) gekoppelt ist, entgegengesetzt ist, zwischen dem Paar von Kopplungsteilen (242) eigeführt ist, um rotierbar gekoppelt zu sein.

12. Zellgreifer nach Anspruch 1, wobei eine Schlitznut, welche einen U-förmigen vertikalen Querschnitt aufweist, in dem Gehäuse (100) an einer Position definiert ist, welche der Zellsitznut zugewandt ist.

13. Zellgreifer nach Anspruch 12, wobei die Schlitznut definiert ist, um eine Größe aufzuweisen, welche größer als eine Größe der Zellsitznut ist.

14. Zelltransfervorrichtung (1), umfassend:
einen Zellgreifer (10), welcher als wenigstens einer bereitgestellt ist; und
eine Halterung (20), welche dazu eingerichtet ist, den Zellgreifer (10) von unter dem Zellgreifer (10) zu befestigen,
wobei der Zellgreifer ein Zellgreifer nach Anspruch 1 ist.

## Revendications

1. Dispositif de préhension de cellule comprenant :
un boîtier (100) ; et
un ensemble de préhension (200) monté dans le boîtier (100),
**caractérisé en ce que** l'ensemble de préhension (200) comprend :
un support de cellule (210) dans lequel est définie une rainure de positionnement de cellule ayant une partie supérieure dans laquelle une cellule est introduite pour être positionnée ;
une paire d'engrenages à pignons (220) disposés respectivement sur les deux surfaces latérales du support de cellule (210) et configurés pour convertir un mouvement linéaire vertical du support de cellule (210) en mouvement rotatif ;
une paire de châssis d'engrenages (230) accouplés respectivement à la paire d'engrenages à pignons (220) et configurés pour transmettre le mouvement de rotation des engrenages à pignons ; et
une paire d'éléments de fixation de cellule (240) disposés respectivement sur des parties d'extrémité de la paire de châssis d'engrenages (230) et configurés pour presser et fixer la cellule logée dans la rainure de positionnement de cellule des deux côtés.

2. Dispositif de préhension de cellule selon la revendication 1, dans lequel, dans l'ensemble de préhension (200), la paire d'engrenages à pignons (220) tourne par descente du support de cellule (210), et la paire de châssis d'engrenages (230) et la paire d'éléments de fixation de cellule (240) se déplacent, par rotation de la paire d'engrenages à pignons (220), dans une direction de la rainure de positionnement de cellule pour presser et fixer la cellule des deux côtés.

3. Dispositif de préhension de cellule selon la revendication 1, dans lequel l'ensemble de préhension (200) comprend en outre un élément élastique (250) disposé sous le support de cellule (210) et configuré pour fournir une force élastique dans une direction verticale du support de cellule (210).

4. Dispositif de préhension de cellule selon la revendication 1, dans lequel le support de cellule (210) comprend :
une paire d'engrenages à crémaillère (211), dont chacun a une longueur dans une direction verticale, sont disposés pour être espacés l'un de l'autre et présentent une surface extérieure sur laquelle sont formées des dents de scie ; et
une partie de raccordement disposée sous la paire d'engrenages à crémaillère (211) et configurée pour raccorder entre elles la paire d'engrenages à crémaillère (211).

5. Dispositif de préhension de cellule selon la revendication 4, dans lequel la rainure de positionnement de cellule est définie par des surfaces latérales internes de la paire d'engrenages à crémaillère (211) se faisant face et la partie de raccordement disposée sous la paire d'engrenages à crémaillère (211) de façon à présenter une section verticale en forme de U.

6. Dispositif de préhension de cellule selon la revendication 1, dans lequel chacun des engrenages à pignons (220) est doté :
d'un trou traversant axial traversant les deux surfaces latérales de l'engrenage à pignons (220) à une position correspondant à un axe de rotation virtuel ; et
d'une saillie d'accouplement faisant saillie vers l'extérieur à partir d'une surface latérale dans laquelle le trou traversant axial est défini.

7. Dispositif de préhension de cellule selon la revendication 1, dans lequel chacun des châssis d'engrenages (230) comprend :
un premier châssis (230-1) accouplé à une surface latérale de chacun des engrenages à pignons (220) ; et
un deuxième châssis (230-2) ayant un côté accouplé au premier châssis (230-1) et l'autre côté accouplé à chacun des éléments de fixation de cellule (240),
dans lequel le premier châssis (230-1) présente un côté, qui est disposé pour correspondre à un trou traversant axial de l'engrenage à pignons (220) de façon à être accouplé à l'engrenage à pignons (220), et l'autre côté accouplé au deuxième châssis (230-2),
dans lequel le premier châssis (230-1) est accouplé à une saillie d'accouplement de l'engrenage à pignons (220) entre un côté et l'autre côté.

8. Dispositif de préhension de cellule selon la revendication 7, dans lequel le châssis d'engrenage (230) comprend en outre un troisième châssis (230-3) ayant un côté accouplé au deuxième châssis (230-1) et l'autre côté accouplé en rotation au boîtier (100).

9. Dispositif de préhension de cellule selon la revendication 8, dans lequel le troisième châssis (230-3) est accouplé au deuxième châssis (230-2) de façon à être disposé entre l'élément de fixation de cellule (240) et le premier châssis (230-1).

10. Dispositif de préhension de cellule selon la revendication 7, dans lequel l'élément de fixation de cellule (240) comprend :
une partie de pression (241) fournie en tant que surface plane ; et
une paire de parties d'accouplement (242) courbées vers l'arrière des deux côtés de la partie de pression (241).

11. Dispositif de préhension de cellule selon la revendication 10, dans lequel, dans le deuxième châssis (230-2), l'autre côté opposé au côté accouplé au premier châssis (230-1) est inséré entre la paire de parties d'accouplement (242) de façon à être accouplé en rotation.

12. Dispositif de préhension de cellule selon la revendication 1, dans lequel une rainure d'encoche présentant une section verticale en forme de U est définie dans le boîtier (100) à une position orientée vers la rainure de positionnement de cellule.

13. Dispositif de préhension de cellule selon la revendication 12, dans lequel la rainure d'encoche est définie pour avoir une taille supérieure à une taille de la rainure de positionnement de cellule.

14. Dispositif de transfert de cellule (1) comprenant :
un dispositif de préhension de cellule (10) fourni en au moins un exemplaire ; et
un dispositif de montage (20) configuré pour fixer le dispositif de préhension de cellule (10) par le dessous du dispositif de préhension de cellule (10), dans lequel le dispositif de préhension de cellule est un dispositif de préhension de cellule selon la revendication 1.
